# EUROPEAN PATENT APPLICATION

(11) **EP 1 918 184 A2**
(43) Date of publication of application: **07.05.2008**
(21) Application number: 07119677.8
(22) Date of filing: 30.10.2007
(51) Int. Cl.: B62H 3/10, B62H 5/00, B62H 3/08

(54) **Locking device**

(30) Priority: 30.10.2006 NL 1032765; 04.01.2007 NL 1033164
(71) Applicant: Kooymans Beheer B.V., 5611 JC Eindhoven (NL)
(72) Inventor: van de Veer, Erik, 3533 AD Utrecht (NL)
(74) Representative: Verhees, Godefridus Josephus Maria

(57) **Abstract**

A locking device 1 has a mainly U-shaped frame 3 that is present in a housing 5, and two locking elements 7 opposite each other near the ends of the frame, which have a swivel connection to the frame 3.

The locking device 1 also has a locking mechanism 11 that prevents the locking elements 7 from turning when they are in a locking position, in which they close off the opening in the U-shape. This locking mechanism 11 has two arms 13 that have a swivel connection to the frame 3.

The locking mechanism also has activation devices 15 that are connected to one of the ends 13a of the arms 13. The other ends 13b of the arms 13 are provided with catches 17 that are positioned in notches in the locking elements 7 in the locking position and prevent them from turning.

The activation devices 15 can pull the ends 13a towards each other so that the catches 17 can be pulled out of the notches and release the locking elements 7.

## Description

### BACKGROUND OF THE INVENTION:

### Field of the invention

The invention relates to a locking device for locking an object, particularly a frame tube of a cycle, which locking device comprises a mainly U-shaped frame and two locking elements opposite each other near the ends of the legs of the U-shape, which at least partly close off the opening between the legs and which are hinged to the frame, which locking device also comprises a locking mechanism that prevents the locking elements from turning when they are in a locking position in which they close off the opening.

### Prior art

Such a locking device is known in Dutch patent number 1028581.

### Summary of the invention

An objective of the invention is to improve the known locking device. For this purpose, the locking device according to the invention is characterised in that the locking mechanism comprises two arms that have a swivel connection to the legs of the U-shaped frame at a distance from the ends, and activation devices in which the arms are connected via one of the ends to the activation devices and are provided with catches on the other ends that prevent the locking elements from turning when they are in the locking position, which activation devices can pull the ends towards each other so that the catches on the other ends release the locking elements.

There are preferably notches in the locking device in which the catches are positioned when they are in the locking position.

An embodiment of the locking device according to the invention is characterised in that the activation devices comprise two sections that can be moved to and from each other, and in that the locking mechanism comprises a blocking catch that blocks these sections when the activation devices are not activated so that they cannot be moved towards each other and therefore the catches cannot be moved out of the notches, which blocking catch releases the sections on activation of the activation devices.

Preferably the activation devices comprise a solenoid that is formed by a coil inside of which there is a movable magnetic core, so that the sections are formed by the coil and the core, and in which one of the arms is connected to the coil and the other arm to the magnetic core.

### Brief description of the drawings

The invention will be elucidated more fully below on the basis of drawings in which embodiments of the locking device according to the invention are shown. In these drawings:
Figure 1 shows a first embodiment of the locking device according to the invention in perspective;.
Figure 2 shows the locking device from below in perspective, with one half of the housing omitted;
Figure 3 shows the locking device from below with one half of the housing omitted;
Figure 4 shows the locking device from the top with the whole housing omitted;
Figure 5 shows an exploded view of the locking device in perspective, and
Figure 6 shows a side elevation of a second embodiment of the locking device according to the invention.

### Detailed description of the drawings

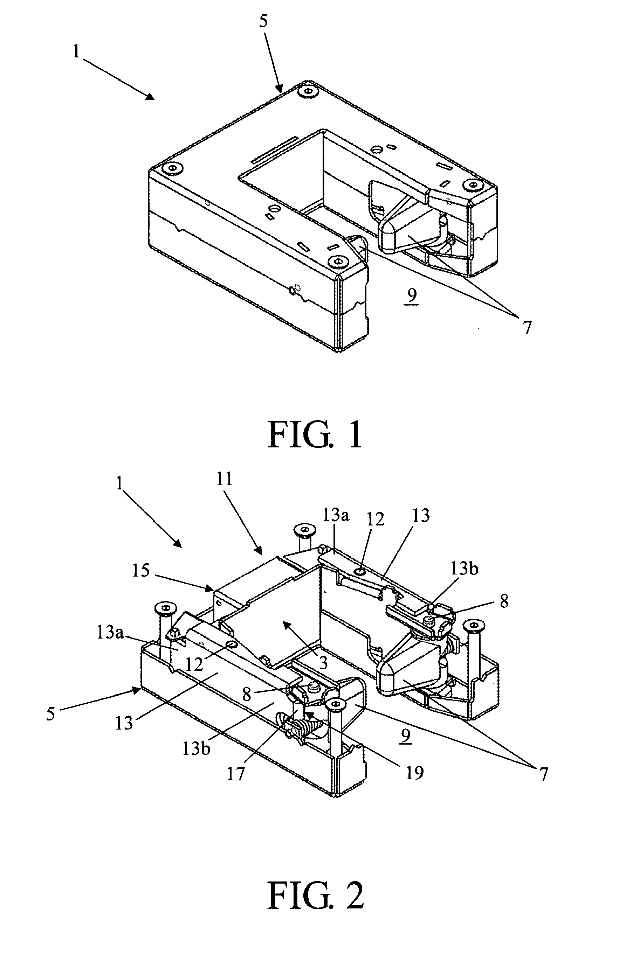

Figures 1-5 show a first embodiment of the locking device according to the invention. The locking device 1 has a mainly U-shaped frame 3 that is present in a box-like housing 5, see figures 1 and 2, and two locking elements 7 opposite each other near the ends of the legs of the U-shape. These locking elements 7 can be turned around shafts 8 connected to the frame and partly close off the opening 9 between the legs.

The locking device 1 also has a locking mechanism 11, see figure 2, which prevents the locking elements 7 from turning when they are in a locking position in which they close off the opening. This locking mechanism 11 has two arms 13 that are present in the legs of the U-shaped housing 5 and which are hinged to the frame 3 around hinged shafts 12 at a distance from the ends 13a, 13b. The locking mechanism also has activation devices that are formed by a solenoid 15 and which are connected to one of the ends 13a of the arms 13. The other ends 13b of the arms 13 are provided with catches 17, which, when in the locking position, are positioned in notches 19 in the locking elements 7 and prevent them from turning.

Activation of the solenoid 15 pulls the arms 13 with the ends 13a towards each other. In this way the arms 13 lie against the inner wall of the housing 5. One arm always touches the inner wall first after which the other arm moves on further. This pulls the catches 17 on the other ends out of the notches and releases the locking elements 7.

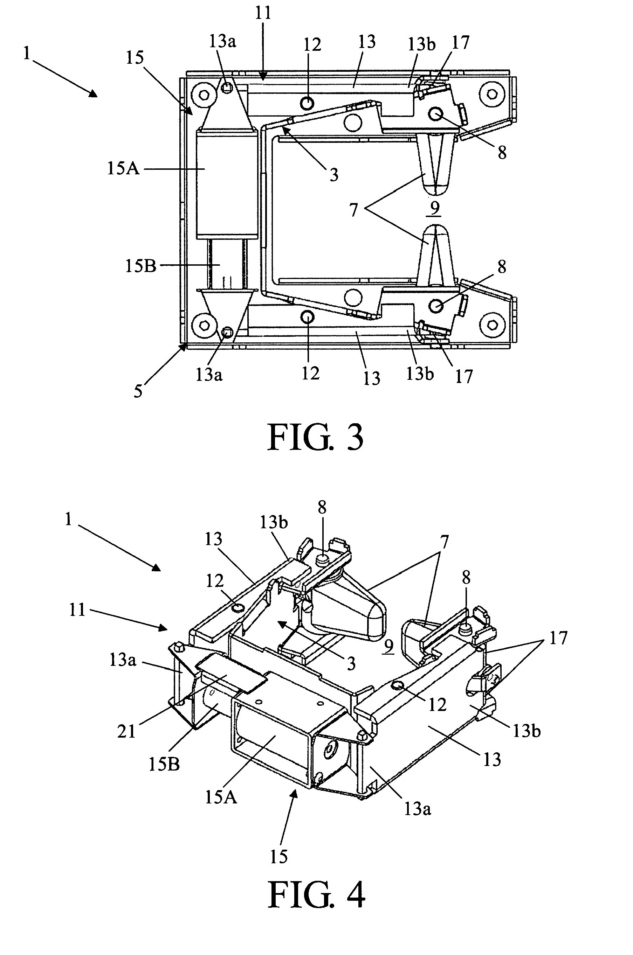

The solenoid 15, see figure 3, has two sections that can be moved to and from each other, which are formed by a coil 15A and a magnetic core 15B that can be moved inside it. The ends 13a of the arms are connected to this coil and core.

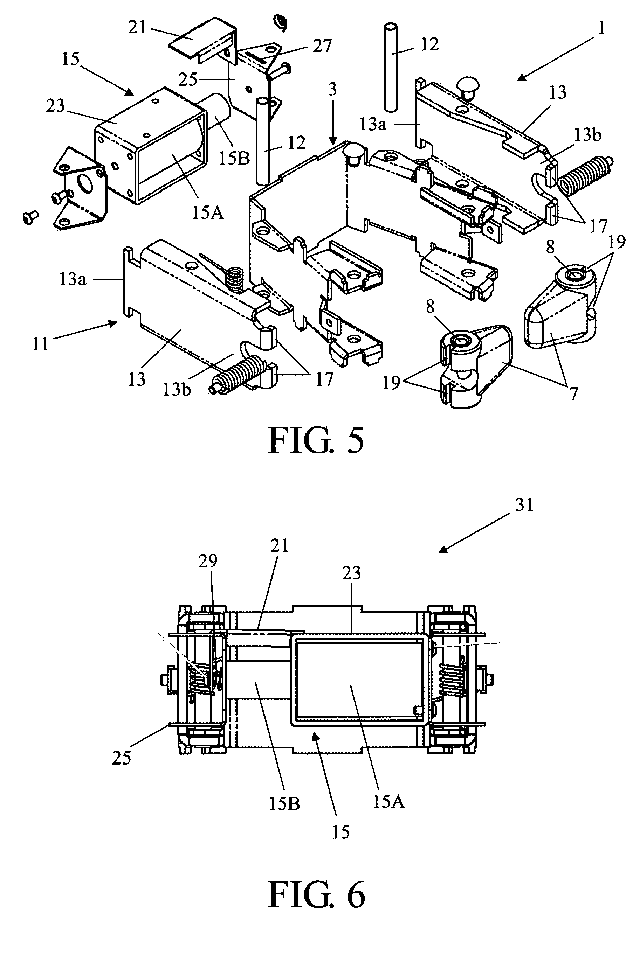

The locking mechanism 11 also has a blocking catch 21, see figures 4 and 5, where the locking device is shown from the top, which blocks the coil 15A and the core 15B with respect to each other when the activation devices are not activated, so that they cannot be moved towards each other and therefore the catches 17 cannot be moved out of the notches. Activating the solenoid 15 pulls the core 15B on the blocking catch 21, which then tips upwards and removes the blockage between the coil housing 23 and a connecting element 25 that is present between the core 15B and the end 13a of the arm. The blocking catch 21 thus hinges in a slot 27 in the connecting element 25. The remaining part of the movement of the core 15B occurs in the coil 15A in order to pull the ends 13a of the arms towards each other and therefore the ends 13b away from each other. Gravity ensures that the blocking catch 21 tips downwards between the coil housing 23 and the connecting element 25 if the current is removed from the coil and the core 15B is pushed outside the coil 15A by a spring worked into the solenoid 15.

A spring 29 can also be used instead of relying on gravity, see the second embodiment of the locking device 31 according to the invention shown in figure 6. All parts that are equal to those of the first embodiment are shown with the same reference numbers. This spring 29 is present between the connecting element 25 and the blocking catch 21. The spring 29 must be weaker than the internal spring in the solenoid 15, so that it will be depressed first on activation (and thus allow the blocking catch to tip) before the ends 13a of the arms are pulled towards each other.

Although in the above the invention is explained on the basis of the drawings, it should be noted that the invention is in no way limited to the embodiments shown in the drawings. The invention also extends to all embodiments deviating from the embodiments shown in the drawings within the context of the claims. The activation devices can thus be formed by other electronically operated devices instead of by the solenoid shown here, for example by an electrical motor.

## Claims

1. Locking device for locking an object, particularly a frame tube of a cycle, which locking device comprises a mainly U-shaped frame and two locking elements opposite each other near the ends of the legs of the U-shape that at least partly close off the opening between the legs and which are hinged to the frame, which locking device also comprises a locking mechanism that prevents the locking elements from turning when they are in a locking position in which they close off the opening, **characterised in that** the locking mechanism comprises two arms that have a swivel connection to the legs of the U-shaped frame at a distance from the ends, and activation devices in which the arms are connected via one of the ends to the activation devices and are provided with catches on the other ends that prevent the locking elements from turning when they are in the locking position, which activation devices can pull the ends towards each other so that the catches on the other ends release the locking elements.

2. Locking device according to claim 1, **characterised in that** notches are present in the locking elements in which the catches are positioned when they are in the locking position.

3. Locking device according to claim 1 or 2, **characterised in that** the activation devices comprise two sections that can be moved to and from each other, and **in that** the locking mechanism comprises a blocking catch that blocks these sections when the activation devices are not activated so that they cannot be moved towards each other and therefore the catches cannot be moved out of the notches, which blocking catch releases the sections on activation of the activation devices.

4. Locking device according to claim 3, **characterised in that** the activation devices comprise a solenoid that is formed by a coil with a movable magnetic core inside it, in which one of the arms is connected to the coil and the other arm to the magnetic core.
